(19)

Europäisches Patentamt
European Patent Office
Office européen des brevets

(11) **EP 3 082 021 A1**

(12) **EUROPEAN PATENT APPLICATION**

(43) Date of publication:
19.10.2016 Bulletin 2016/42

(51) Int Cl.:
**G06F 3/0354** (2013.01)  **G01L 1/18** (2006.01)
**G01L 1/22** (2006.01)

(21) Application number: 16167474.2

(22) Date of filing: 20.05.2014

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: 20.05.2013 US 201361825118 P

(62) Document number(s) of the earlier application(s) in accordance with Art. 76 EPC:
**14732643.3 / 3 000 014**

(71) Applicant: **Microsoft Technology Licensing, LLC Redmond, WA 98052-6399 (US)**

(72) Inventor: **STERN, Yuval**
**4050000 Even-Yehuda (IL)**

(74) Representative: **Hill, Justin John et al**
**Olswang LLP**
**90 High Holborn**
**London WC1V 6XX (GB)**

Remarks:
This application was filed on 28-04-2016 as a divisional application to the application mentioned under INID code 62.

(54) **DYNAMIC CALIBRATION OF A PIEZORESISTIVE SENSOR FOR A STYLUS**

(57) Calibration method for a pressure sensitive stylus including a stylus housing, a writing tip protruding from the housing and a pressure sensor. The pressure sensor includes a piezoresistive element. The dynamic calibration method accumulates the output of the sensor during its use (410) for adjusting the bias applied to the piezoresistive element (440,450).

FIG. 5

EP 3 082 021 A1

**Description**

This application claims the benefit of priority under 35 USC §119(e) of U.S. Provisional Patent Application No. 61/825,118 filed May 20, 2013, the contents of which are incorporated herein by reference in their entirety.

FIELD AND BACKGROUND OF THE INVENTION

The present invention, in some embodiments thereof, relates to a pressure sensitive stylus and, more particularly, but not exclusively, to a pressure sensitive stylus for operation with a digitizer system.

Styluses are known in the art for use with a digitizer system. Position detection of the stylus provides input to a computing device associated with the digitizer and is interpreted as user commands. In some known systems, position detection is performed only while the stylus tip is touching a detection surface of the digitizer. In other known system, position detection is also performed while the stylus tip is hovering over a detection surface of the digitizer. Typically, hover and touch input is interpreted differently. Often, the digitizer is integrated with a display screen, e.g. to form a touch screen and a position of the stylus over the screen is correlated with virtual information portrayed on the screen.

US Patent No. 8,536,471, entitled "Pressure Sensitive Stylus for a Digitizer," assigned to N-Trig Ltd., the contents of which is incorporated herein by reference, describes a pressure sensitive stylus with a movable tip that recedes within a housing of the stylus in response to user applied contact pressure. An optical sensor enclosed within the housing senses displacement of the tip and provides output in response to the sensing. Displacement of the tip is a function of the applied contact pressure.

US Patent Application Publication No. 2008-0170046 entitled "System and Method for Calibration of a Capacitive Touch Digitizer System," assigned to N-Trig Ltd., the contents of which is incorporated herein by reference, describes a method for dynamically calibrating a capacitive touch digitizer system that is operated with a stylus. The method includes detecting patterns of signals emitted by a stylus over plurality of different events, e.g. touch and hover events, wherein the patterns of signals are outputs from a digitizer sensor of the system. Pattern of signals that are repeated are identified and hover input is defined when a pattern of signals that is repeated above a pre-defined repetition threshold is identified.

SUMMARY OF THE INVENTION

According to an aspect of some embodiments of the present invention there is provided a stylus with a piezoresistive sensor for sensing pressure applied on a tip of a stylus and a method for calibrating output from the piezoresistive sensor. In some exemplary embodiments, the piezoresistive sensor operates as a tip switch for identifying a touch operational state of the stylus. Optionally, the piezoresistive sensor operates to sense tip pressure and/or changes in tip pressure while a user performs operations with the stylus.

According to an aspect of some embodiments of the present invention there is provided a pressure sensitive stylus including a housing; a writing tip that protrudes from the housing; and a pressure sensor. The pressure sensor includes a piezoresistive element; a support element including a first end fixed to the writing tip and a second end that is opposite the first end and presses against the piezoresistive element; and circuitry for detecting pressure applied on the piezoresistive element with the support element.

Optionally, the pressure sensitive stylus includes an elastic element or layer positioned between the second end of the support element and the piezoresistive element.

Optionally, a surface of the elastic element that contacts the piezoresistive element is shaped with at least one protruding element.

Optionally, the elastic element is formed from a first elastic element formed from a first elastic material that is stacked over a second elastic layer formed from a second elastic material, wherein the first and second elastic materials provide different elastic properties.

Optionally, the piezoresistive element includes a first piezoresistive layer formed from a first piezoresistive material that is stacked over a second piezoresistive layer formed from a second piezoresistive material.

Optionally, the piezoresistive element is mounted on a PCBA that is fixed to the housing of the stylus.

Optionally, the piezoresistive element is mounted on the housing of the stylus.

Optionally, the writing tip has a range of motion in relation to the housing of the stylus responsive to pressure applied on the writing tip.

Optionally, the support element is an integral part of the writing tip.

Optionally, the circuitry includes a variable voltage or current source operable to apply a bias on the piezoresistive element and a controller operable to adjust the bias applied on the piezoresistive element responsive to a change in an average pressure detected over a defined duration.

Optionally, the defined duration is between 1 second and 10 minutes.

Optionally, the pressure sensitive stylus includes a signal generator operable to generate a signal that provides information regarding the pressure detected by circuitry of the pressure sensor.

Optionally, the pressure sensor is operated as a tip switch for detecting onset of a touch operational mode of the stylus.

According to an aspect of some embodiments of the present invention there is provided a method for sensing pressure applied on a writing tip of a stylus, the method includes providing a piezoresistive pressure sensor for sensing pressure applied on the writing tip of the stylus; defining a first output level that corresponds to no-pressure applied on the writing tip of the stylus; detecting outputs from the piezoresistive pressure sensor while a user operates the stylus; determining an accumulated average of the outputs detected over a defined duration; comparing the first output level to the accumulated average; and dynamically calibrating the piezoresistive pressure sensor responsive to result of said comparing.

Optionally, the defined duration is at least 1 second.

Optionally, dynamically calibrating the piezoresistive pressure sensor includes updating the first output level.

Optionally, dynamically calibrating the piezoresistive pressure sensor includes adjusting a bias applied on a piezoresistive element of the sensor.

Optionally, a discrepancy between the first output level the accumulated average is corrected by increments over time.

Optionally, the method includes defining a second output level corresponding to a pressure defined for switching between a touch and hover operational mode; comparing the outputs from the piezoresistive pressure sensor to the second output level; and switching to the touch operational mode responsive to identifying output from the outputs that is beyond the second output level.

Optionally, dynamically calibrating the piezoresistive pressure sensor includes adjusting the second output level.

Optionally, the method includes reporting the outputs from the piezoresistive pressure sensor to a digitizer system.

Optionally, the method includes storing at least one parameter for calibrating the piezoresistive pressure sensor; and updating the stored parameters responsive to the comparing.

Unless otherwise defined, all technical and/or scientific terms used herein have the same meaning as commonly understood by one of ordinary skill in the art to which the invention pertains. Although methods and materials similar or equivalent to those described herein can be used in the practice or testing of embodiments of the invention, exemplary methods and/or materials are described below. In case of conflict, the patent specification, including definitions, will control. In addition, the materials, methods, and examples are illustrative only and are not intended to be necessarily limiting.

BRIEF DESCRIPTION OF THE DRAWINGS

Some embodiments of the invention are herein described, by way of example only, with reference to the accompanying drawings. With specific reference now to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.

In the drawings:

FIG. 1 is a simplified block diagram of an exemplary pressure sensitive stylus in accordance with some embodiments of the present invention;

FIG. 2 is a simplified schematic drawing of an exemplary stylus tip assembly with a pressure sensing mechanism in accordance with some embodiments of the present invention;

FIGS. 3A, 3B and 3C are simplified schematic drawings of three alternative pressure sensing mechanisms that provide a desired non-linear response to applied pressure in accordance with some embodiments of the present invention;

FIG. 4 is a simplified electrical diagram for a piezoresistive pressure sensor for a stylus in accordance with some embodiments of the present invention;

FIG. 5 is a simplified flow chart of an exemplary method for dynamically calibrating a piezoresistive pressure sensor in accordance with some embodiments of the present invention; and

FIG. 6 is a simplified block diagram of an exemplary digitizer system in operation with a pressure sensitive stylus in accordance with some embodiments of the present invention.

DESCRIPTION OF SPECIFIC EMBODIMENTS OF THE INVENTION

The present invention, in some embodiments thereof, relates to a pressure sensitive stylus and, more particularly, but not exclusively, to a pressure sensitive stylus for operation with a digitizer system.

According to some embodiments of the present invention, there is provided a stylus with a piezoresistive sensor for sensing pressure applied on a tip of a stylus. According to some embodiments of the present invention, the piezoresistive sensor includes a piezoresistive element positioned to face a mechanical element fixed to the stylus tip, e.g. a tip holder. Typically, the tip holder presses against the piezoresistive element with varying degrees of pressure in response to varying pressure applied on the stylus tip. Typically, the pressure applied on the piezoresistive element is a function of pressure applied on the stylus tip as well as the contact area between the piezoresistive element and the mechanical element. Optionally, when the tip is coupled to an elastic element to provide a resilient force in response to applied pressure, pressure applied on the piezoresistive element is also function of the properties of the elastic element.

Typically, the piezoresistive element is connected to circuitry in the stylus and the circuitry is mounted on a substrate that is held stationary with respect to a housing of the stylus. In some exemplary embodiments, the piezoresistive element is mounted on a printed circuit board assembly (PCBA) that is fixed and/or clamped to the housing of the stylus. In some exemplary embodiments, when the piezoresistive element is biased and connected to a voltage divider so that a change is resistance of the piezoresistive element can be monitored for sensing different pressure levels. Typically, the voltage is a function of the input voltage as well as the resistance provided by the piezoresistive element. Optionally, when the piezoresistive element is biased and connected on a low side of a voltage divider, the voltage at the voltage divider decreases as the pressure on the piezoresistive element increases and the resistance of the piezoresistive element decreases.

According to some embodiments of the present invention, the pressure sensing mechanism is used for identifying when a writing tip of the stylus is touching down on a surface, e.g. a transition between hover and touch. Optionally, the pressure sensing mechanism is used as a tip switch for initiating operation of the stylus in response to pressure applied on the tip, e.g. as when writing. In some exemplary embodiments, the pressure sensing mechanism is also used for sensing varying pressure levels applied on the tip while pressing down on the writing tip, e.g. writing with the stylus. Optionally, non-linear attributes are added to the pressure sensing mechanism, e.g. so that a relationship between pressure and output is non-linear at least at a transition between hover and tip to improve recognition of the transition.

In some exemplary embodiments, a desired non-linear attribute is added by using two different piezoresistive elements that are stacked. Optionally, the piezoresistive elements are sensitive over different ranges of pressure. Optionally, non-linear attributes are additionally or alternatively added to the pressure sensing mechanism by introducing an elastic element between the piezoresistive element and the mechanical element fixed to the tip. Optionally, the elastic element deforms and a surface area of the elastic element that presses against the piezoresistive element changes in response to tip pressure. Optionally, the change is defined to occur in a stepwise fashion around a transition between hover and touch.

The present inventor has found that piezoresistive sensor may be advantageous as compared to other sensors for sensing tip pressure of a stylus due to its low cost, reduced number of parts and its linear attributes that are typically maintained over a large range of pressures. The present inventor has also found that the piezoresistive sensor may provide a more robust construction that may withstand high pressures as when the stylus falls on it tip.

One known difficulty in working with piezoresistive elements is due to their sensitivity to changes in temperature. Output provided by the piezoresistive element may vary over time due to changes in ambient temperatures and/or due to temperature changes in surrounding electrical and/or mechanical components. The present inventor has found that typical changes in temperature found to occur in surrounding electrical components of a stylus during its operation may alter the output provided by the piezoresistive element and adversely affect an ability of the pressure sensor to repeatedly identify a transition pressure defined for activating and/or deactivating a touch mode. Additionally inaccuracies in pressure sensing can also occur over time due to changes in ambient temperatures, aging of components and/or tolerances of components of the pressure sensing mechanism. Typically, a rate in which the output drifts due to temperature changes and/or tolerances in mechanical components is significantly slower than a rate in which the output changes due to pressure applied on the writing tip.

According to some embodiments of the present invention, there is provided a method for dynamically calibrating output from the piezoresistive sensor while a user performs operation with the stylus, e.g. for writing, pointing and/or providing commands and/or while the stylus is in operation mode. The dynamic calibration method is based on the observation that a typical pattern of outputs obtained by a user performing operations with the stylus includes short transient periods over which a user applies pressure on the writing tip, surrounded by significantly longer periods over which no pressure is applied on the writing tip. Based on this observation, the present inventor has that found that an output level that corresponds to no pressure applied on the writing tip can be determined from accumulated average output obtained over a duration of 1 second or more and/or a duration between 1 second and 10 minutes. Optionally the duration over which the accumulated average is determined is greater than 1 minute and/or between 1 second to 10 minutes and/or is adjusted based on types of operations performed with the stylus. Optionally, accumulated average output is determined over longer durations of about 20 minutes. In some exemplary embodiments, output from the pressure sensor is sampled once every 1 to 20 milliseconds. Optionally, the accumulated average is obtained using 5-1000 samples, e.g. 50 to 500 samples or more. According to some embodiments of the present invention, drift in the output provided by the piezoresistive pressure sensor is detected by comparing the accumulated average output to an output level currently used to identify no-pressure applied on the writing tip. In some exemplary embodiments, statistical methods other than accumulated averages and/or in addition to accumulated averages are used to detect and/or estimate a base-line output corresponding to output obtained when no pressure is applied on the writing tip.

In some exemplary embodiments, the output level associated with a transition between hover and touch is adjusted based on the detected drift in the output. Optionally, a defined relationship between output detected and pressure applied on the stylus is adjusted based on the detected drift in the output. In some or other exemplary embodiments, the input voltage used to bias the piezoresistive element is adjusted to correct for the detected drift in the output. Optionally, when the input voltage used to charge the piezoresistive element is adjusted, the output level associated with the transition is maintained. Typically, adjustments to parameters are made in a stepwise fashion in response to a series of accumulated average measurements to avoid erratic changes in pressure detection. Typically, drift in the output is determined and dynamic calibration is performed with the same output from the piezoresistive sensor that is concurrently used for detecting and/or reporting pressure applied on the writing tip of the stylus.

Before explaining at least one embodiment of the invention in detail, it is to be understood that the invention is not necessarily limited in its application to the details of construction and the arrangement of the components and/or methods set forth in the following description and/or illustrated in the drawings. The invention is capable of other embodiments or of being practiced or carried out in various ways.

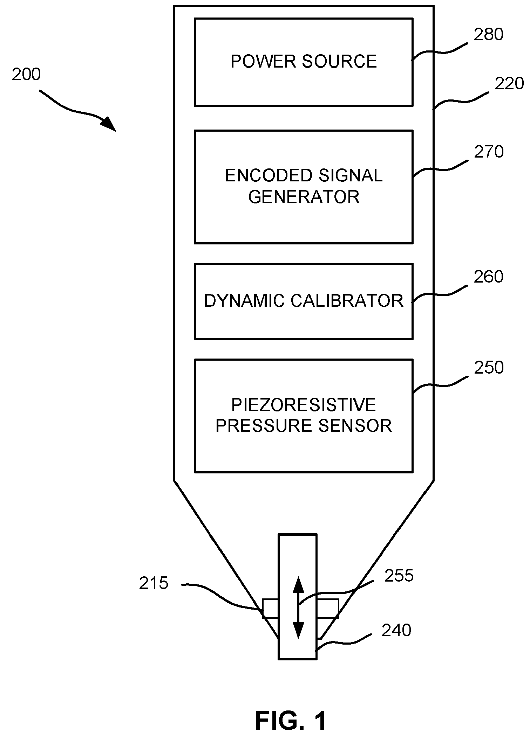

Referring now to the drawings, FIG. 1 shows a simplified block diagram of an exemplary pressure sensitive stylus in accordance with some embodiments of the present invention. According to some embodiments of the present invention, a stylus 200 includes a housing 220, a movable tip 240, a piezoresistive pressure sensor and/or pressure sensing mechanism 250, a signal generator 270 and a power source 280. Optionally, stylus 200 additionally includes a dynamic calibrator 260 for calibrating output detected from piezoresistive pressure sensor 250 while a user is operating and/or using the stylus.

Optionally, when pressure is applied on tip 240, tip 240 recedes into housing 220 in axial direction 255 and is subsequently released when the contact pressure is released, e.g. a hovering state or non-touch mode or state of the stylus. Typically, during axial movement, tip 110 is engaged with a resilient element 215 whose properties are selected to obtain a desired stiffness and/or a desired relationship between contact pressure and axial displacement. Typically, applied contact pressure ranges between 0-2 Kg-force, e.g. 0-350 gram-force. According to some embodiments of the present invention, the resilient element is selected to provide for axial displacement ranging between 0-500 $\mu$m, e.g. 0-200 $\mu$m in response to range of applied contact pressure between 0-2 Kg-force, e.g. 0-350 gram-force. In some exemplary embodiments, the relationship between tip displacement and contact pressure is a not linear. Optionally, an initial pressure, e.g. 15 gram force, displaces the tip 50$\mu$m and additional pressure up to 350 gram-force displaces the tip an additional 150 $\mu$m - 200 $\mu$m. Optionally, axial movement of tip 240 is blocked by the piezoresistive element of the sensor.

According to some embodiments of the present invention, piezoresistive pressure sensor 250 is operable to sense axial pressure applied on tip 240 and to output a signal proportional to the sensed pressure. According to some embodiments of the present invention, dynamic calibrator 260 monitors output from piezoresistive pressure sensor 250 during operation of the stylus and calibrates its output as required. In some exemplary embodiments, dynamic calibrator 260 is operable to adjust output related to a transition between a hover and touch state of the stylus.

According to some embodiments of the present invention, pressure detected by piezoresistive pressure sensor 250 is communicated to a digitizer system and/or sensor. In some exemplary embodiments, information regarding the pressure detected is encoded in a signal that is transmitted by stylus 200. Typically, signal generator 270 receives information from pressure sensor 250 and generates an encoded signal based on the received information that is transmitted for pick up by an associated digitizer sensor. Optionally, signal generator 270 encodes additional information on a signal for transmission. According to some embodiments of the present invention, signal generator 270 produces a pulsed oscillating signal. Typically, signal generator 270 includes and/or is in communication with an oscillator to produce an AC signal. In some exemplary embodiments, encoding is provided by FSK. Optionally encoding is by PSK and/or ASK.

According to some embodiments of the present invention, stylus 200 is powered by power source 280. Typically, power source 280 includes one or more batteries, e.g. 4A alkaline battery. Optionally rechargeable batteries are used. In some exemplary embodiments, power source 280 is associated with a voltage stabilizer to stabilize voltage from power source 280.

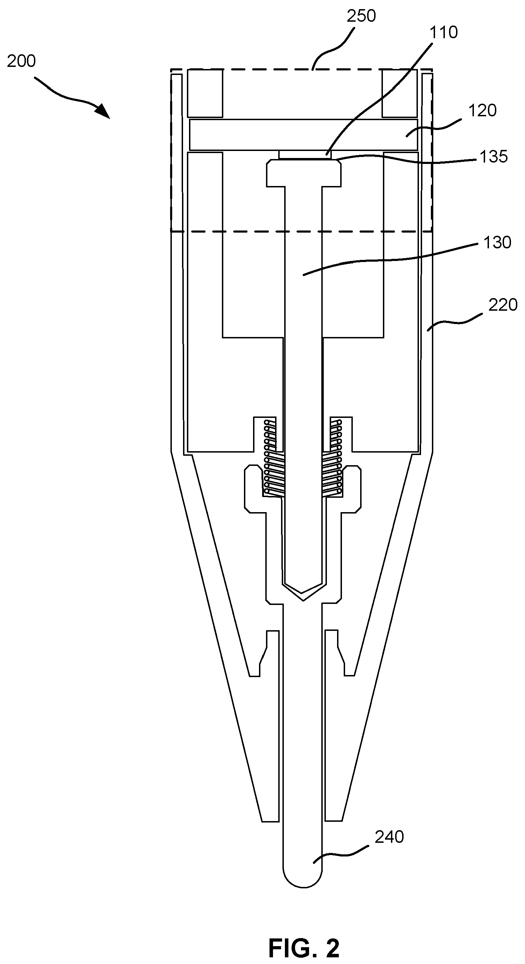

Reference is now made to FIG. 2 showing an exemplary stylus tip assembly with a pressure sensing mechanism in accordance with some embodiments of the present invention. According to some embodiments of the present invention, pressure sensing mechanism and/or pressure sensor 250 includes a piezoresistive element 110 that is positioned to face and physically contact an element 130 that is fixed to a tip 240 of a stylus 200. Optionally, tip 240 has some range of motion in response to pressure being applied as when writing with the tip 240, e.g. tip 240 recedes toward housing 220 in response to applied pressure. Optionally, a range of motion of the tip is up to 200 $\mu$m, but may be much lower than 200 $\mu$m absent an elastic element, since piezoresistive element 110 limits and/or blocks movement of tip 240. Typically, tip 240 is not fixed to housing 220 of stylus 200.

According to some embodiments of the present invention, piezoresistive element 110 is mounted on a PCBA 120 of stylus 200. Typically, PCBA 120 is fixed to housing 220 of stylus 200. Typically, PCBA 120 electrical connects piezoresistive element 110 to circuitry so that a change in resistance in piezoresistive element 110 can be detected by circuitry of stylus 200.

According to some embodiments of the present invention, element 130 is an extension of tip 240 and is generally in the shape of a rod. Alternatively, element 130 is integral part of tip 240. In some exemplary embodiments, element 130 includes a contact surface 135 that is sized, shaped and positioned to interface with, e.g. press against piezoresistive element 110. Optionally, surface 135 is coated and/or coupled with elastic material that is compressed and/or deformed in response to pressure applied on tip 240.

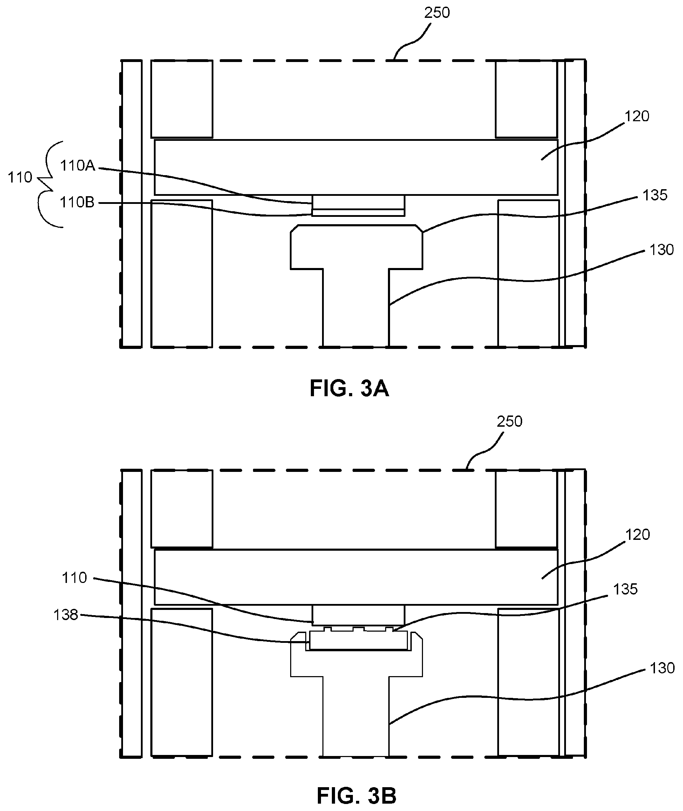

Reference now made to FIGS. 3A and 3B showing simplified schematic drawings of two alternative pressure sensing mechanisms that provide a desired non-linear response to applied pressure in accordance with some embodiments of the present invention. In FIG. 3A, a desired non-linear response is provided by using more than one piezoresistive element, e.g. piezoresistive element 110A and piezoresistive element 110B. Typically, the piezoresistive element 110A and piezoresistive element 110B operate as two variable resistors in series. In some exemplary embodiments, piezoresistive element 110A and piezoresistive element 110B have different hardness and/or are sensitive to different ranges of pressure that together provide a non-linear response.

In FIG. 3B, a desired non-linear response is provided by using a contact surface 135 with contact area that varies over different pressure ranges. Optionally, contact surface 135 is a surface of an elastic element 138 that is mounted on element 130. In some exemplary embodiments, elastic element 138 includes one or more protrusions, e.g. protruding rings that collapse and/or compress with pressure. Typically, the shape of the elastic element, e.g. height of the protrusion is defined so that the response is non-linear around a transition into a touch operational mode. Alternatively, elastic element 138 is flat and the non-linear response is obtained after and/or around full compression of elastic element 138.

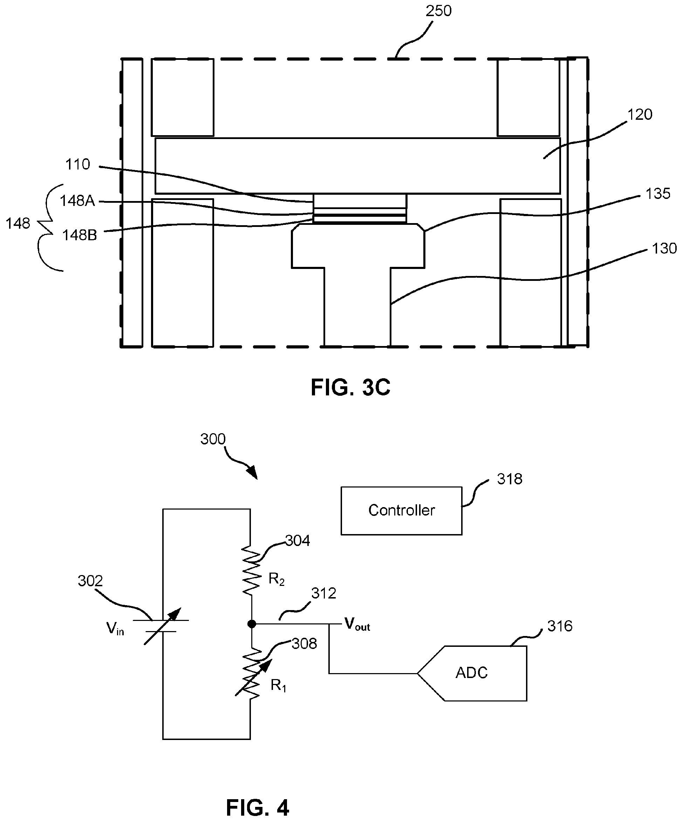

In FIG. 3C, a desired non-linear response is provided by using elastic element and/or an elastomer 148 is formed from two or more layers with different elastic properties and the different elastic properties provide a desired non-linear response to pressure. In some exemplary embodiments, elastic element 148 includes a first layer 148A associated with a first hardness and a second layer 148B associated with a second hardness, different than the first hardness.

Reference is now made to FIG. 4 showing a simplified circuit diagram representing a piezoresistive pressure sensor for a stylus in accordance with some embodiments of the present invention. According to some embodiments of the present invention, circuit diagram 300 representing pressure sensor 250 includes variable resistor 308 representing piezoresistive element 110, a resistor 304, a voltage source 302 and a voltage divider 312. Optionally, voltage source 302 is variable.

According to some embodiments of the present invention, during operation of the stylus, voltage, $V_{out}$ at voltage divider 312 is monitored, e.g. sampled. According to some embodiments of the present invention, $V_{out}$ is governed by the following relationship:

$$V_{out} = V_{in}\left(\frac{R_1}{R_1+R_2}\right) \qquad \text{Equation (1)}$$

Typically, as pressure applied on the piezoresistive element increases, the resistance of the piezoresistive element, $R_1$ decreases. This change in resistance is reflected by corresponding change in $V_{out}$.

Typically, $V_{out}$ is sampled with an analog to digital converter ADC 316 and output from ADC 316 is used by a controller 318, for monitoring pressure. Typically, controller 318 includes and/or is associated with memory and processing capability. According to some embodiments of the present invention, the memory provides for storing a threshold for $V_{out}$ corresponding to pressure defined for activating a touch mode and/or for storing parameters defining a relationship between $V_{out}$ and pressure. In some exemplary embodiment, $V_{in}$ associated with the defined threshold for $V_{out}$ is also stored in memory. Typically, thresholds, parameters and $V_{in}$ are defined during a dedicated calibration procedure, e.g. performed in a manufacturing site.

According to some embodiments of the present invention, during operation of the stylus, drifts in $V_{out}$ that may occur due to temperature changes, mechanical tolerances and/or aging of parts are compensated for by adjusting $V_{in}$

and/or by updating the stored thresholds and/or parameters.

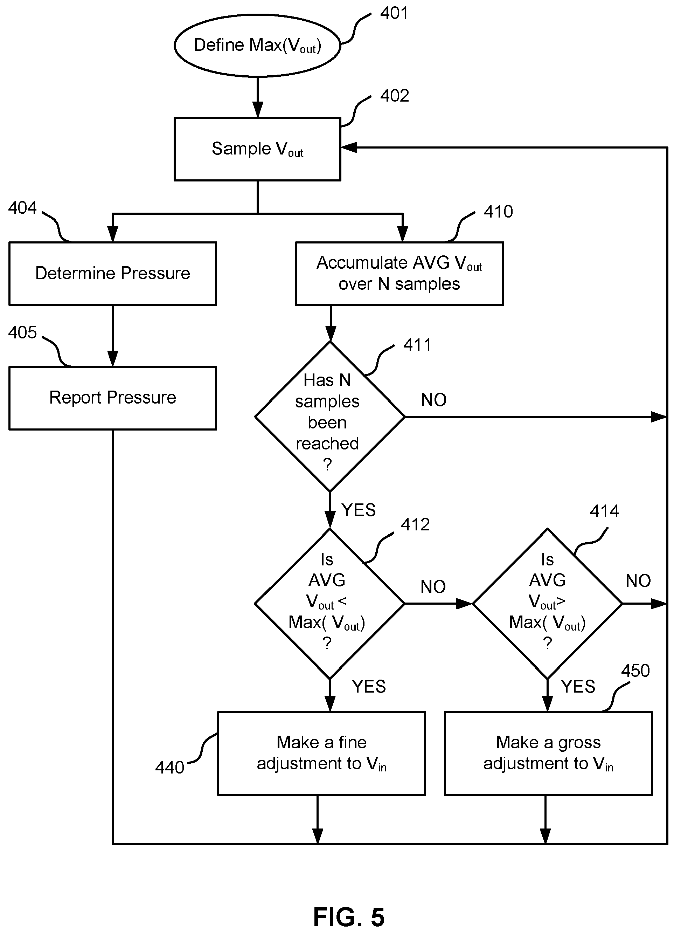

Reference is now made to FIG. 5, showing a simplified flow chart of an exemplary method for dynamically calibrating a piezoresistive pressure sensor in accordance with some embodiments of the present invention. According to some embodiments of the present invention, a maximum $V_{out}$ corresponding to nominal and/or no pressure applied on the writing tip is defined and stored in memory (block 401). Optionally, maximum $V_{out}$ is defined during a dedicated calibration procedure and stored in memory. It is noted that the exemplary method described in FIG. 5 corresponds to embodiments where maximum $V_{out}$ corresponds to nominal or no pressure applied on the writing tip and minimum $V_{out}$ corresponds to maximum pressure applied on the writing tip. As can be apparent to a person skilled in the art, a similar method can be applied for embodiments where minimum $V_{out}$ corresponds to a neutral state and maximum $V_{out}$ corresponds to a maximum pressure applied to pen tip, and such methods are within the scope of the present invention although not explicitly described.

According to some embodiments of the present invention, during operation of the stylus, $V_{out}$ is sampled (block 402) and used to determine and report pressure applied on the writing tip (blocks 404, 405). Typically, pressure is detected on a per sample basis. Optionally, pressure is determined based on average values of a few sample values of $V_{out}$, e.g. 2-5 samples of $V_{out}$. According to some embodiments, dynamic calibration (blocks 410-450) is performed concurrently with pressure detection (blocks 404-405). According to some embodiments of the present invention, accumulated average of $V_{out}$ is determined over a defined number of samples (block 410). Once an accumulated average is determined (block 411), the average value is compared to the maximum $V_{out}$ stored in memory and/or $V_{out}$ corresponding to nominal or no pressure applied (blocks 412, 414). In some exemplary embodiments, if the average $V_{out}$ is less than the maximum $V_{out}$ stored in memory, $V_{in}$ is adjusted by increments over time, e.g. over a plurality of accumulated averages to reduce the detected drift (block 440). Typically, the detected drift will be fully compensated for over a plurality of incremental adjustments. Typically, correcting drift slowly over a plurality of accumulated averages maintains stability of output provided by the pressure sensor and avoids sharp changes in output due to an unexpected pattern of input and/or incorrect estimation of the maximum $V_{out}$. Optionally, a parameter other than $V_{in}$ is adjusted to compensate for drift, e.g. maximum $V_{out}$ stored in memory is adjusted based on the detected drift.

In some exemplary embodiments, if the average $V_{out}$ is larger than the maximum $V_{out}$ stored in memory, a gross adjustment to $V_{in}$ may be made to correct the drift over a shorter period of time (block 450). The present inventors have found that the average $V_{out}$ typically drifts to higher voltages after the maximum $V_{out}$ has been erroneously reduced responsive to the stylus tip been pressed down for an unexpected extended duration. In such a case it may be advantageous to quickly correct the drift.

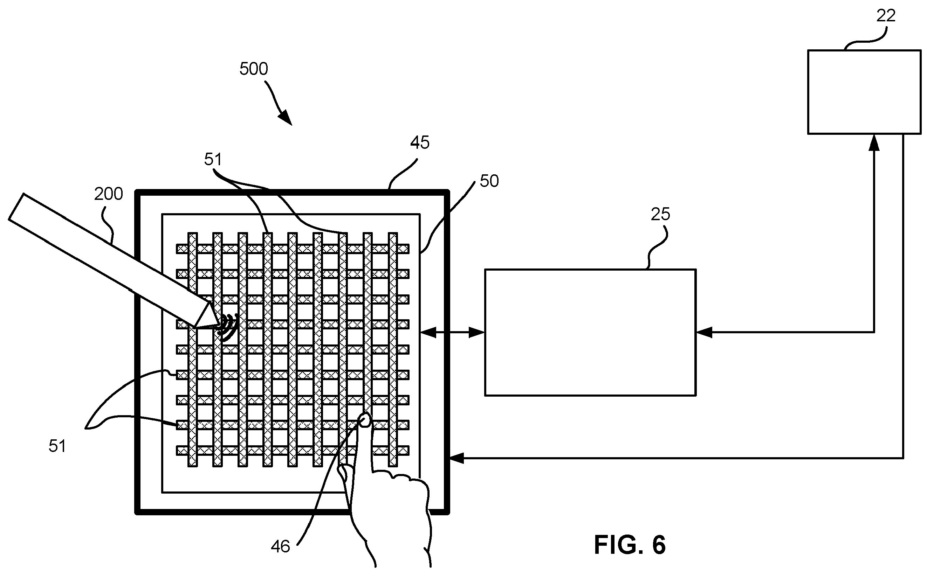

Reference is now made to FIG. 6 showing a simplified block diagram of an exemplary digitizer system in operation with a pressure sensitive stylus in accordance with some embodiments of the present invention. According to some embodiments of the present invention, a computing device 500 includes a display screen 45 that is integrated with a digitizer sensor 50. In some exemplary embodiments, digitizer sensor 50 is a grid based capacitive sensor formed from conductive strips 51 that are operative to detect both input by pressure sensitive stylus 200 transmitting a signal and input by one or more fingertips 46 or other conductive objects. According to some embodiments of the present invention, pressure applied on a tip of stylus 200 is sensed with piezoresistive sensor 250 included in stylus 200. In some exemplary embodiments, output piezoresistive sensor 250 is transmitted by stylus 200 and picked up by one or more conductive lines 51. Optionally, output from piezoresistive sensor 250 is encoded in a position signal transmitted by stylus 200. Optionally, information indicating a touch or hover operational state, as detected by the variable capacitor sensor, is encoded in the position signal transmitted by stylus 200. Optionally, output from piezoresistive sensor 250 is transmitted in response to a query signal transmitted by digitizer system 500. Optionally piezoresistive sensor 250 senses or detects a touch operational state and in response stylus 200 begins to transmit a position signal. Optionally, stylus 200 continues to transmit a signal for the duration of the touch operational state and for a pre-defined period after the touch operational state is terminated. Optionally, stylus 200 transmits signal bursts both during a touch operational state and a hover operational state, however a transmission repeat rate during a hover operational state is reduced.

According to some embodiments of the present invention, a mutual capacitance detection method and/or a self-capacitance detection method are applied for sensing input from fingertip 46. Typically, during mutual capacitance and self-capacitance detection, digitizer circuitry 25 is required to send a triggering pulse and/or interrogation signal to one or more conductive strips 51 of digitizer sensor 50 and to sample output from the conductive strips in response to the triggering and/or interrogation. In some embodiments, some or all of conductive strips 51 along one axis of the grid based sensor are interrogated simultaneously or in a consecutive manner, and in response to each interrogation, outputs from conductive strips 51 on the other axis are sampled. This scanning procedure provides for obtaining output associated with each junction of the grid based sensor 50. Typically, this procedure provides for detecting one or more conductive objects, e.g. fingertip 46 touching and/or hovering over sensor 50 at the same time (multi-touch).

Typically, output from digitizer circuitry 25 is reported to host 22. Typically, the output provided by digitizer circuitry 25 includes coordinates of stylus 200, a pressure state or level of a tip of stylus 200 and/or coordinates of one or more fingertips 46 interacting with digitizer sensor 50. Optionally, digitizer circuitry 25 reports a hover or touch state for stylus 200. Optionally, digitizer circuitry 25 reports pressure applied on the stylus tip. Optionally, digitizer circuitry 25 additionally reports a hover or touch state for fingertip(s) 46. Typically, digitizer circuitry 25 uses both analog and digital processing to process signals and/or data picked up from sensor 50. Optionally, some and/or all of the functionality of digitizer circuitry 25 are integrated and/or included in host 22.

Digitizer systems that are similar to digitizer system 500 with digitizer circuitry 25 are described with further details, for example in U.S. Patent No. 6,690,156 entitled "Physical object location apparatus and method and a graphical display device using the same," U.S. Patent No. 7,372,455 entitled "Touch Detection for a Digitizer," U.S. Patent No. 7,292,229 entitled "Transparent Digitiser," U.S. Patent No. 8,481,872, entitled "Digitizer, Stylus and Method of Synchronization Therewith," the contents of all these patents are incorporated herein by reference.

Optionally, digitizer sensor 50 is alternatively an in-cell, on-cell, out-cell, transparent sensor or any other non-capacitive sensor technology, including but not limited to resistive, IR, ultrasonic, optical, or the like.

The terms "comprises", "comprising", "includes", "including", "having" and their conjugates mean "including but not limited to".

The term "consisting of" means "including and limited to".

The term "consisting essentially of" means that the composition, method or structure may include additional ingredients, steps and/or parts, but only if the additional ingredients, steps and/or parts do not materially alter the basic and novel characteristics of the claimed composition, method or structure.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination or as suitable in any other described embodiment of the invention. Certain features described in the context of various embodiments are not to be considered essential features of those embodiments, unless the embodiment is inoperative without those elements.

The invention can be further described with respect to the following consistory clauses:

1. A pressure sensitive stylus comprising:

a housing;
a writing tip that protrudes from the housing; and
a pressure sensor comprising:

a piezoresistive element;
a support element including a first end fixed to the writing tip and a second end that is opposite the first end and presses against the piezoresistive element; and
circuitry for detecting pressure applied on the piezoresistive element with the support element.

2. The pressure sensitive stylus according to clause 1, comprising an elastic element or layer positioned between the second end of the support element and the piezoresistive element.

3. The pressure sensitive stylus according to clause 2, wherein a surface of the elastic element that contacts the piezoresistive element is shaped with at least one protruding element.

4. The pressure sensitive stylus according to clause 2 or clause 3, wherein the elastic element is formed from a first elastic element formed from a first elastic material that is stacked over a second elastic layer formed from a second elastic material, wherein the first and second elastic materials provide different elastic properties.

5. The pressure sensitive stylus according to any one of clauses 1-4, wherein the piezoresistive element includes a first piezoresistive layer formed from a first piezoresistive material that is stacked over a second piezoresistive layer formed from a second piezoresistive material.

6. The pressure sensitive stylus according to any one of clauses 1-5, wherein the piezoresistive element is mounted on a PCBA that is fixed to the housing of the stylus.

7. The pressure sensitive stylus according to any one of clauses 1-6, wherein the piezoresistive element is mounted on the housing of the stylus.

8. The pressure sensitive stylus according to any one of clauses 1-7, wherein the writing tip has a range of motion in relation to the housing of the stylus responsive to pressure applied on the writing tip.

9. The pressure sensitive stylus according to any one of clauses 1-8, wherein the support element is an integral part of the writing tip.

10. The pressure sensitive stylus according to any one of clauses 1-9, wherein the circuitry comprises:

a variable voltage or current source operable to apply a bias on the piezoresistive element; and
a controller operable to adjust the bias applied on the piezoresistive element responsive to a change in an average pressure detected over a defined duration.

11. The pressure sensitive stylus according to clause 10, wherein the defined duration is between 1 second and 10 minutes.

12. The pressure sensitive stylus according to any one of clauses 1-11, comprising a signal generator operable to generate a signal that provides information regarding the pressure detected by circuitry of the pressure sensor.

13. The pressure sensitive stylus according to any one of clauses 1-12, wherein the pressure sensor is operated as a tip switch for detecting onset of a touch operational mode of the stylus.

14. A method for sensing pressure applied on a writing tip of a stylus, the method comprising:

providing a piezoresistive pressure sensor for sensing pressure applied on the writing tip of the stylus;
defining a first output level that corresponds to no-pressure applied on the writing tip of the stylus;
detecting outputs from the piezoresistive pressure sensor while a user operates the stylus;
determining an accumulated average of the outputs detected over a defined duration;
comparing the first output level to the accumulated average; and
dynamically calibrating the piezoresistive pressure sensor responsive to result of said comparing.

15. The method according to clause 14, wherein the defined duration is at least 1 second.

16. The method according to clause 14 or clause 15, wherein dynamically calibrating the piezoresistive pressure sensor includes updating the first output level.

17. The method according to any one of clauses 14-16, wherein dynamically calibrating the piezoresistive pressure sensor includes adjusting a bias applied on a piezoresistive element of the sensor.

18. The method according to any one of clauses 14-16, wherein a discrepancy between the first output level the accumulated average is corrected by increments over time.

19. The method according to any one of clauses 14-18, comprising:

defining a second output level corresponding to a pressure defined for switching between a touch and hover operational mode;
comparing the outputs from the piezoresistive pressure sensor to the second output level; and
switching to the touch operational mode responsive to identifying output from the outputs that is beyond the second output level.

20. The method according to clause 19, wherein dynamically calibrating the piezoresistive pressure sensor includes adjusting the second output level.

21. The method according to any one of clauses 14-20, comprising reporting the outputs from the piezoresistive pressure sensor to a digitizer system.

22. The method according to any one of clauses 14-21, comprising storing at least one parameter for calibrating the piezoresistive pressure sensor; and updating the stored parameters responsive to the comparing.

**Claims**

1. A method for sensing pressure applied on a writing tip of a stylus, the method comprising:

   providing a piezoresistive pressure sensor for sensing pressure applied on the writing tip of the stylus;
   defining a first output level that corresponds to no-pressure applied on the writing tip of the stylus;
   detecting outputs from the piezoresistive pressure sensor while a user operates the stylus;
   determining an accumulated average of the outputs detected over a defined duration;
   comparing the first output level to the accumulated average; and
   dynamically calibrating the piezoresistive pressure sensor responsive to result of said comparing.

2. The method according to clause 1, wherein the defined duration is at least 1 second.

3. The method according to clauses 1 or 2, wherein dynamically calibrating the piezoresistive pressure sensor includes updating the first output level.

4. The method according to any one of clauses 1-3, wherein dynamically calibrating the piezoresistive pressure sensor includes adjusting a bias applied on a piezoresistive element of the sensor.

5. The method according to any one of clauses 1-3, wherein a discrepancy between the first output level the accumulated average is corrected by increments over time.

6. The method according to any one of clauses 1-5, comprising:

   defining a second output level corresponding to a pressure defined for switching between a touch and hover operational mode;
   comparing the outputs from the piezoresistive pressure sensor to the second output level; and
   switching to the touch operational mode responsive to identifying output from the outputs that is beyond the second output level.

7. The method according to clause 6, wherein dynamically calibrating the piezoresistive pressure sensor includes adjusting the second output level.

8. The method according to any one of clauses 1-7, comprising reporting the outputs from the piezoresistive pressure sensor to a digitizer system.

9. The method according to any one of clauses 1-8, comprising storing at least one parameter for calibrating the piezoresistive pressure sensor; and updating the stored parameters responsive to the comparing.

200

POWER SOURCE — 280

— 220

ENCODED SIGNAL
GENERATOR — 270

DYNAMIC CALIBRATOR — 260

— 250

PIEZORESISTIVE
PRESSURE SENSOR

215

255

240

## FIG. 1

**FIG. 2**

250

110 { 110A
       110B

120

135

130

**FIG. 3A**

250

110

138

120

135

130

**FIG. 3B**

**FIG. 3C**

**FIG. 4**

**FIG. 5**

FIG. 6

Europäisches
Patentamt

European
Patent Office

Office européen
des brevets

# EUROPEAN SEARCH REPORT

Application Number

EP 16 16 7474

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2011/012872 A1 (CHIANG SHUN-FAN [TW]) 20 January 2011 (2011-01-20) * the whole document * | 1-9 | INV. G06F3/0354 G01L1/18 G01L1/22 |
| Y | WO 92/18927 A1 (HOME ROW INC [US]) 29 October 1992 (1992-10-29) * page 8, line 14 - line 24 * * page 20, line 28 - page 21, line 32 * * page 27, line 20 - line 27 * | 1-9 | |
| A | US 2010/051356 A1 (STERN YUVAL [IL] ET AL) 4 March 2010 (2010-03-04) * paragraphs [0002] - [0007] * * paragraphs [0072] - [0085]; figure 1A * * paragraphs [0098] - [0099]; figures 5B,6 * * paragraphs [0105] - [0113]; figure 8 * | 1-9 | |
| A | EP 0 758 739 A1 (MOTOROLA SEMICONDUCTEURS [FR]) 19 February 1997 (1997-02-19) * the whole document * | 1-9 | TECHNICAL FIELDS SEARCHED (IPC) G06F G01L |

The present search report has been drawn up for all claims

| Place of search | Date of completion of the search | Examiner |
|---|---|---|
| The Hague | 31 August 2016 | Suarez Y Gonzalez, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 16 7474

This annex lists the patent family members relating to the patent documents cited in the above-mentioned European search report.
The members are as contained in the European Patent Office EDP file on
The European Patent Office is in no way liable for these particulars which are merely given for the purpose of information.

31-08-2016

| Patent document cited in search report | | Publication date | Patent family member(s) | | Publication date |
|---|---|---|---|---|---|
| US 2011012872 | A1 | 20-01-2011 | CN  101957665 A<br>US  2011012872 A1 | | 26-01-2011<br>20-01-2011 |
| WO 9218927 | A1 | 29-10-1992 | DE  69221140 D1<br>EP  0580800 A1<br>WO  9218927 A1 | | 04-09-1997<br>02-02-1994<br>29-10-1992 |
| US 2010051356 | A1 | 04-03-2010 | US  2010051356 A1<br>US  2013265265 A1 | | 04-03-2010<br>10-10-2013 |
| EP 0758739 | A1 | 19-02-1997 | EP  0758739 A1<br>FR  2737777 A1 | | 19-02-1997<br>14-02-1997 |

EPO FORM P0459

For more details about this annex : see Official Journal of the European Patent Office, No. 12/82

**EP 3 082 021 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61825118 A
- US 8536471 B
- US 20080170046 A
- US 6690156 B
- US 7372455 B
- US 7292229 B
- US 8481872 B